# EUROPÄISCHE PATENTANMELDUNG

(11) **EP 1 927 765 A2**
(43) Veröffentlichungstag der Anmeldung: **04.06.2008**
(21) Anmeldenummer: 07021953.0
(22) Anmeldetag: 13.11.2007
(51) Int. Cl.: F16B 13/14

(54) **Ankerhülse für einen Verbundanker**

(30) Priorität: 01.12.2006 DE 102006056865
(71) Anmelder: fischerwerke GmbH & Co. KG, 72178 Waldachtal (DE)
(72) Erfinder: Grün, Jürgen, 79268 Bötzingen (DE); Schwaab, Frank, 79350 Sexau (DE); Schmidt, Clemens, 79211 Denzlingen (DE)
(74) Vertreter: Suchy, Ulrich Johannes

(57) **Zusammenfassung**

Die Erfindung betrifft eine Ankerhülse (1) für einen Verbundanker, die siebartig ist und Austrittsöffnungen (2) für Mörtel aufweist. Die Erfindung schlägt vor, die Ankerhülse (1) durch einen Folienstreifen (6), der durch Längsschlitze (5) durchtritt und in der Ankerhülse (1) einen Teiler (7) bildet, in zwei Kammern zu unterteilen und die Ankerhülse (1) mit dem Folienstreifen (6) als Umhüllung (8) zu umschließen. Dadurch ist die Ankerhülse (1) hermetisch dicht verschlossen und in zwei Kammern unterteilt, in denen ein Binder und ein Härter eines Kunstharzmörtels getrennt voneinander enthalten sind. Durch Abwickeln und Herausziehen des Folienstreifens (6) wird die Ankerhülse (1) gebrauchsfertig gemacht.

## Beschreibung

Die Erfindung betrifft eine Ankerhülse für einen Verbundanker mit den Merkmalen des Oberbegriffs des Anspruchs 1.

Bekannte Verbundanker weisen Ankerstangen auf, die mit Mörtel in einem Bohrloch in Beton oder Mauerwerk befestigt werden. Die Ankerstange kann beispielsweise ein Gewindestab oder auch ein spezieller, gleichachsig hintereinander angeordnete Spreizkonen aufweisender Ankerstab sein. Als Mörtel sind Zweikomponenten-Kunstharzmörtel mit einem Binder und einem Härter bekannt, deren Komponenten gemischt werden müssen. Es sind beispielsweise Glasampullen bekannt, in denen die Komponenten des Mörtels getrennt voneinander und in der für eine Verankerung notwendigen Menge enthalten sind. Die Glasampulle wird in das Bohrloch eingebracht und durch nachfolgendes Einbringen der Ankerstange zerstört. Die Komponenten werden mit dem Anker, beispielsweise durch drehendes Einbringen der Ankerstange, gemischt. Verankerungen mit Verbundankern werden auch als chemische Verankerungen bezeichnet.

Für Verbundanker sind Ankerhülsen bekannt. Dabei handelt es sich üblicherweise um siebrohrförmige oder schlauchförmige Elemente, die den Anker umschließen und die mit oder vor der Ankerstange in das Bohrloch eingebracht werden. Der Mörtel wird vor der Ankerstange in die Ankerhülse eingebracht und von der Ankerstange durch Austrittsöffnungen im Umfang der Ankerhülse verdrängt, der Mörtel tritt in das Bohrloch aus und hält nach dem Aushärten die Ankerstange. In Hohlsteinen hat die Ankerhülse den Zweck, den Mörtel im Bohrloch und an der Ankerstange zu halten, damit der Mörtel nicht in Hohlräumen verloren geht. Ein weiterer Zweck einer Ankerhülse kann ein vorläufiges ausgerichtetes Halten der Ankerstange im Bohrloch bis zum Aushärten des Mörtels sein. Normalerweise ist es nicht Zweck der Ankerhülse, die Festigkeit der Verankerung zu erhöhen.

Aufgabe der Erfindung ist es, eine Ankerhülse für einen Verbundanker vorzuschlagen, die den zur Verankerung notwendigen Mörtel portioniert enthält.

Diese Aufgabe wird erfindungsgemäß durch die Merkmale des Anspruchs 1 gelöst. Die erfindungsgemäße Ankerhülse weist mindestens eine Austrittsöffnung in ihrem Umfang auf, durch die Mörtel aus der Ankerhülse austreten kann. Vorzugsweise ist die Ankerhülse siebartig ausgebildet, d.h. sie weist eine große Anzahl Austrittsöffnungen in ihrem Umfang für den Mörtel auf. Eine lösbare Umhüllung umschließt die Ankerhülse hermetisch dicht, sie verhindert ein Austrocknen und Aushärten von in der Ankerhülse enthaltenem Mörtel. Des weiteren weist die erfindungsgemäße Ankerhülse einen entfernbaren Teiler auf, der die Ankerhülse in zwei Kammern unterteilt, in denen zwei Komponenten, beispielsweise ein Binder und ein Härter, des Mörtels getrennt voneinander enthalten sind. Vorzugsweise teilt der Teiler die Ankerhülse in Längsrichtung, weil dadurch zuverlässiger eine gute Durchmischung der Komponenten als bei einer erfindungsgemäß ebenfalls möglichen Querteilung der Ankerhülse zu erwarten ist. Die Erfindung ist nicht auf zwei Kammern beschränkt, der oder mehrere Teiler können die Ankerhülse auch in mehr als zwei Kammern unterteilen.

Zur Verwendung werden die Umhüllung und der Teiler von der Ankerhülse entfernt, die Ankerhülse wird in ein Bohrloch in Beton oder in einem Mauerwerk eingebracht und eine Ankerstange wird in die Ankerhülse eingebracht. Durch das Einbringen der Ankerstange werden die in der Ankerhülse enthaltenen Komponenten des Mörtels gemischt und durch die mindestens eine Austrittsöffnung werden die gemischten Komponenten, also der Mörtel, teilweise aus der Ankerhülse verdrängt. Der Mörtel härtet aus und verankert die Ankerstange im Bohrloch. Zur Verbesserung der Mischung der beiden Komponenten kann die Ankerstange drehend in die Ankerhülse eingebracht werden. Die erfindungsgemäße Ankerhülse dient zunächst zum portionierten und voneinander getrennten Aufbewahren der Komponenten des Mörtels. Weiterhin kann die Ankerhülse den Zweck erfüllen, die Ankerstange im Bohrloch auszurichten und bis zum Aushärten des Mörtels ausgerichtet im Bohrloch zu halten. Im Rahmen der Erfindung ist es darüber hinaus möglich, die Ankerhülse als Dübel auszubilden, der zur Verankerung beiträgt. Beispielsweise kann die Ankerhülse als Spreizdübel ausgebildet sein, der vom Anker aufgespreizt wird und die Festigkeit der Verankerung erhöht. Bei der Ausbildung der Ankerhülse als Dübel kann der Ankerstab beispielsweise in die Ankerhülse eingeschlagen oder eingeschraubt werden.

Ein Vorteil der Erfindung ist, dass die Ankerhülse den zur Verankerung notwendigen Mörtel in der erforderlichen Menge enthält, wobei die Komponenten des Mörtels voneinander getrennt in der Ankerhülse enthalten sind, so dass sie nicht vor der Verwendung der Ankerhülse austrocknen, aushärten oder in anderer Weise chemisch reagieren. Weiterer Vorteil der erfindungsgemäßen Ankerhülse ist eine einfache Handhabung. Darüber hinaus hält sie in Hohlsteinen den Mörtel an der Ankerstange und verhindert, dass der Mörtel in Hohlräumen verloren geht. Zudem kann die Ankerhülse die Ankerstange im Bohrloch ausrichten und bis zum Aushärten des Mörtels ausgerichtet halten. Bei der Ausbildung der Ankerhülse als Dübel ist die Festigkeit und die Vielseitigkeit der Verankerung erhöht. Bei der Ausbildung der Ankerhülse als Dübel kann ein Verbundanker sowohl in Ankergründen, die sich für Verbundanker, d.h. chemische Verankerungen, als auch in Ankergründen, die sich für mechanische Verankerungen mit Dübeln eignen, befestigt werden.

Eine bevorzugte Ausgestaltung der Erfindung sieht vor, dass die Umhüllung und der Teiler miteinander verbunden sind. Die Umhüllung und der Teiler lassen sich dadurch gemeinsam von der Ankerhülse entfernen. Weiterer Vorteil ist, dass das Entfernen des Teilers nicht vergessen wird.

Eine Ausgestaltung der Erfindung sieht eine Folie als Umhüllung und/oder als Teiler vor. Eine Folie ist preisgünstig, gut zu entfernen und ermöglicht eine zuverlässige, hermetisch dichte Aufbewahrung der Komponenten des Mörtels getrennt voneinander in der Ankerhülse. Zum Umhüllen der Ankerhülse sieht eine Weiterbildung vor, dass die die Umhüllung bildende Folie um die Ankerhülse gewickelt ist. Der Teiler kann durch einen Schlitz aus der Ankerhülse herausziehbar sein. Sind die Umhüllung und der Teiler verbunden und als Folie, insbesondere als Folienstreifen ausgebildet, wird zum Entfernen der die Umhüllung bildende Folienstreifen von der Ankerhülse gewickelt und anschließend der Teiler, der einen Endabschnitt des Folienstreifens bildet, durch den Schlitz aus der Ankerhülse herausgezogen. Die Ankerhülse ist sozusagen mit einem Griff verwendungsfähig.

Eine andere Ausgestaltung der Erfindung sieht vor, dass die Umhüllung rohr- oder schlauchartig ist. Zum Entfernen wird die Umhüllung von der Ankerhülse abgezogen. Eine Weiterbildung sieht vor, dass der Teiler ein flächiges Element ist, das einen Längsschlitz der Ankerhülse durchgreift. Der Teiler durchsetzt die rohr- oder schlauchartige Umhüllung und die Ankerhülse in einer Längsebene, d.h. in einer Längsmittelebene oder in einer dazu parallelen Längsebene. Zum Entfernen wird die Umhüllung in Längsrichtung von der Ankerhülse gezogen, wobei zugleich der Teiler aus dem Längsschlitz der Ankerhülse herausgezogen wird.

Eine Ausgestaltung der Erfindung sieht vor, dass die Umhüllung rohr- oder schlauchartig ist und ein geschlossenes Stirnende aufweist, das ein Stirnende der Ankerhülse verschließt. Die Ankerhülse selbst kann dadurch an dem einen Stirnende offen zum Durchtritt der Ankerstange ausgebildet sein. Bis zur Verwendung verschließt die Umhüllung das offene Stirnende der Ankerhülse hermetisch dicht.

In bevorzugter Ausgestaltung der Erfindung ist die Ankerhülse siebartig ausgebildet, d.h. sie weist eine große Anzahl an Austrittsöffnungen für den Mörtel auf, die gleichmäßig oder ungleichmäßig verteilt angeordnet sein können. Dadurch wird eine verteilte Befüllung des Bohrlochs mit dem Mörtel erreicht.

Eine Ausgestaltung der Erfindung sieht vor, dass die mindestens eine Austrittsöffnung geschlossen ist und durch Druck des Mörtels geöffnet wird. Der Druck des Mörtels entsteht, wenn die Ankerstange in die Ankerhülse eingebracht wird und den Mörtel verdrängt. Die mindestens eine Austrittsöffnung kann beispielsweise als geschlossener Schlitz ausgebildet sein, dessen Ränder aneinander anliegen und der sich durch Verformung der Ankerhülse durch den Druck des Mörtels öffnet. Auch kann die Austrittsöffnung als punkt-, linien- oder flächenförmige, dünnwandige Sollrissstelle ausgebildet sein, an der die Ankerhülse durch den Druck des Mörtels aufreißt, so dass der Mörtel austritt. Da die Ankerhülse bis zur Verwendung von der lösbaren Umhüllung hermetisch dicht umschlossen ist, ist eine hermetische Dichtheit der mindestens einen Austrittsöffnung nicht erforderlich. Die sich erst durch den Druck des Mörtels öffnende mindestens eine Austrittsöffnung hat den Vorteil, dass sich der Mörtel in der Ankerhülse beim Einbringen der Ankerstange erst mischt und erst bei einem ausreichenden Druck des Mörtels austritt. Die Mischung der Komponenten des Mörtels ist dadurch verbessert.

Die Erfindung wird nachfolgend anhand zweier in der Zeichnung dargestellter Ausführungsbeispiele näher erläutert. Die beiden Figuren zeigen zwei Ausführungsformen erfindungsgemäßer Ankerhülsen in perspektivischen Darstellungen.

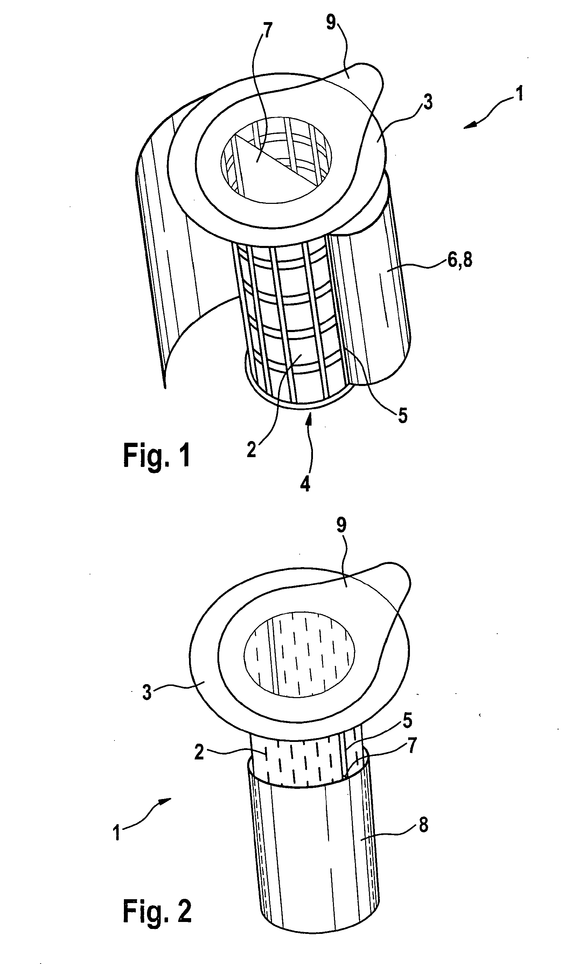

Die in Figur 1 dargestellte Ankerhülse 1 ist rohrförmig und gering konisch. Ihre Umfangswand ist gitter- oder siebartig mit Austrittsöffnungen 2 für Mörtel. Ein Stirnende der Ankerhülse 1 ist offen und weist einen nach außen stehenden Radialflansch 3 auf. Das andere Stirnende ist mit einem Boden 4 verschlossen, wobei der Boden 4 so dünn ist oder eine Sollrissstelle aufweist, so dass er mit einer nicht dargestellten Ankerstange ohne weiteres durchstoßen werden kann. Die Sollrissstelle im Boden 4 kann beispielsweise ein linienförmiger oder kreuzförmiger Schlitz sein, der nicht so tief wie der Boden 4 dick ist und folglich den Boden 4 nicht vollständig durchsetzt. Im Ausführungsbeispiel ist die Ankerhülse 1 aus Kunststoff hergestellt.

An gegenüberliegenden Stellen weist die Ankerhülse 1 jeweils einen Längsschlitz 5 auf, durch den ein Folienstreifen 6 gezogen ist. Ein Abschnitt des Folienstreifens 6 durchsetzt die Ankerhülse 1 quer und teilt sie damit längs in zwei Kammern mit kreissegmentförmigen Querschnitten. Der Abschnitt des Folienstreifens 6, der sich in der Ankerhülse 1 befindet und diese in die beiden Kammern unterteilt, wird nachfolgend als Teiler 7 bezeichnet werden. Befindet sich der Teiler 7 in einer Längsmittelebene der Ankerhülse 1, so sind die beiden Kammern Halbzylinder und haben gleiche Volumina. Befindet sich der Teiler 7 parallel zur Längsmittelebene der Ankerhülse 1 versetzt, so haben die beiden Kammern verschiedene Volumina.

Der durch einen der beiden Schlitze 5 heraustretende Abschnitt des Folienstreifens 6 ist etwas mehr als einmal um die Ankerhülse 1 herumgewickelt, so dass er sich abschnittsweise überlappt. Der Abschnitt des Folienstreifens 6 außerhalb der Ankerhülse 1 wird nachfolgend als Umhüllung 8 bezeichnet werden. Die Umhüllung 8 liegt fest auf der Außenseite der Ankerhülse 1 an, sie haftet auf ihr oder ist mit ihr verklebt. Lediglich zur Veranschaulichung ist die Umhüllung 8 in Figur 1 lose um die Ankerhülse 1 herumgelegt dargestellt. Die Umhüllung 8 umschließt die Ankerhülse 1 hermetisch dicht. Der Teiler 7 trennt die beiden Kammern der Ankerhülse 1 hermetisch voneinander.

Auf den Radialflansch 3 ist eine Schutzfolie 9 klebend oder haftend aufgebracht, die das offene Stirnende der Ankerhülse 1 hermetisch dicht verschließt. Die Schutzfolie 9 ist zur klaren Darstellung der Ankerhülse 1 durchsichtig gezeichnet. Vorzugsweise ist die Schutzfolie 9 ebenso wie der Folienstreifen 6 lichtundurchlässig, um den in der Ankerhülse 1 enthaltenen Mörtel vor Licht zu schützen. In den beiden Kammern der Ankerhülse 1 sind die beiden Komponenten, insbesondere ein Binder und ein Härter eines Zweikomponenten-Kunstharzmörtels, getrennt voneinander enthalten. In der Zeichnung ist der guten Erkennbarkeit der Ankerhülse 1 wegen der Mörtel nicht dargestellt. Die beiden Komponenten des Kunstharzmörtels sind hermetisch dicht in den beiden Kammern der Ankerhülse 1 eingeschlossen.

Zur Verwendung der Ankerhülse 1 wird der die Umhüllung 8 bildende Abschnitt des Folienstreifens 6 von der Ankerhülse 1 gelöst, indem er an einem freien Ende gegriffen und abgezogen und abgewickelt wird. Mit der abgewickelten Umhüllung 8 wird der Teiler 7, der ein Abschnitt des Folienstreifens 6 ist, durch den Längsschlitz 5 aus der Ankerhülse 1 herausgezogen. Es sind damit die Austrittsöffnungen 2 offen und die Komponenten des in der Ankerhülse 1 enthaltenen Mörtels nicht mehr voneinander getrennt. Außerdem wird die Schutzfolie 9 abgezogen. Die Ankerhülse 1 ist damit gebrauchsfertig. Die Ankerhülse 1 wird in ein Bohrloch in einem Ankergrund aus beispielsweise Beton oder Mauerwerk eingesetzt und eine nicht dargestellte Ankerstange wird in die Ankerhülse 1 eingebracht. Die Ankerstange kann den Boden 4 der Ankerhülse 1 durchstoßen. Durch das Einbringen der Ankerstange in die Ankerhülse 1 werden die beiden Komponenten des in der Ankerhülse 1 enthaltenen Mörtels gemischt. Um die Mischwirkung zu verbessern kann die Ankerstange drehend in die Ankerhülse 1 eingebracht werden, auch kann ein an sich bekanntes und hier nicht zu erläuterndes Mischelement auf die Ankerstange aufgesetzt sein. Die Ankerstange verdrängt den Mörtel zum Teil durch die Austrittsöffnungen 2 aus der Ankerhülse 1, so dass der Mörtel die Ankerstange umhüllt und das Bohrloch um die Ankerstange ausfüllt. Der Mörtel härtet aus und verankert die Ankerstange im Bohrloch.

Zur nachfolgenden Erläuterung von Figur 2 werden für mit Figur 1 übereinstimmende Elemente gleiche Bezugszahlen verwendet. Auch die in Figur 2 dargestellte Ankerhülse 1 ist rohrförmig, gering konisch und weist einen Radialflansch 3 an einem offenen Stirnende auf. Das offene Stirnende ist durch eine auf dem Radialflansch 3 haftende oder klebende Schutzfolie 9 hermetisch dicht verschlossen. Im Unterschied zur Ankerhülse 1 aus Figur 1 ist bei der Ankerhülse 1 aus Figur 2 auch das andere Stirnende offen. Die in Figur 2 dargestellte Ankerhülse 1 befindet sich in einer rohrförmigen Umhüllung 8, die wie die Ankerhülse 1 aus Kunststoff besteht. In Figur 2 ist zur anschaulichen Darstellung die Umhüllung 8 ungefähr zur Hälfte von der Ankerhülse 1 axial heruntergezogen dargestellt. Bis zur Benutzung verbleibt die Ankerhülse 1 über ihre gesamte axiale Länge in der Umhüllung 8, die die Ankerhülse 1 hermetisch dicht umschließt. Die Umhüllung 8 weist einen in der Zeichnung nicht sichtbaren Boden auf, der das dem Radialflansch 3 ferne Stirnende der Ankerhülse 1 hermetisch dicht verschließt. Außerdem weist die Umhüllung 8 einen plattenförmigen, sie quer durchsetzenden Teiler 7 auf, der durch Längsschlitze 5 durch die Ankerhülse 1 durchtritt. Der Teiler 7 befindet sich in einer Längsmittelebene oder in einer dazu parallelen Längsebene, er unterteilt die Ankerhülse 1 hermetisch dicht in zwei Kammern, die die beiden Komponenten eines Zweikomponenten-Kunstharzmörtels, insbesondere einen Binder und einen Härter, enthalten. Die beiden Komponenten des Kunstharzmörtels sind dadurch hermetisch getrennt voneinander und dicht eingeschlossen in der Ankerhülse 1 enthalten.

Im Unterschied zur Ankerhülse 1 aus Figur 1 weist die Ankerhülse 1 aus Figur 2 geschlossene Austrittsöffnungen 2 in ihrer Umfangswand für den Mörtel auf, die sich durch Druck des Mörtels öffnen. Im Ausführungsbeispiel sind die Austrittsöffnungen 2 Schlitze, die geschlossen sind und sich durch Verformung der Ankerhülse 1 unter Druck öffnen. Die Schlitze 2 können eine Wandung der Ankerhülse 1 vollständig durchsetzen und durch Anliegen ihrer Schlitzränder aneinander geschlossen sein. Auch können die Schlitze 2 weniger tief sein als die Wandung der Ankerhülse 1 dick ist. In dem Fall bilden die Schlitze 2 Sollrissstellen, die durch Druck des Mörtels aufreißen, d.h. sich als Austrittsöffnungen 2 öffnen.

Zur Verwendung der Ankerhülse 1 wird die rohrförmige Umhüllung 8 axial von der Ankerhülse 1 gezogen, wie es in Figur 2 angedeutet ist. Dabei wird zugleich der mit der Umhüllung 8 einstückige Teiler 7 aus der Ankerhülse 1 herausgezogen. Außerdem wird die Schutzfolie 9 abgezogen. Im Übrigen ist die Verwendung der in Figur 2 dargestellten Ankerhülse 1 gleich wie die der Ankerhülse 1 aus Figur 1 und es wird insoweit auf die Ausführungen zu Figur 1 verwiesen. Durch Einführen einer nicht dargestellten Ankerstange in die Ankerhülse 1 werden die in ihr enthaltenen Komponenten des Kunstharzmörtels gemischt. Durch eine Verdrängungswirkung der Ankerstange wird der Mörtel unter Druck gesetzt und öffnet die geschlossenen Austrittsöffnungen 2, wenn der Druck des Mörtels ausreichend hoch ist. Der Mörtel tritt dann durch die Austrittsöffnungen 2 aus und verankert nach dem Aushärten die Ankerstange im Bohrloch. Durch die geschlossenen, sich erst unter Druck öffnenden Austrittsöffnungen 2 wird der Austritt des Mörtels verzögert und die Durchmischung seiner Komponenten verbessert.

## Patentansprüche

1. Ankerhülse für einen Verbundanker, mit mindestens einer Austrittsöffnung (2) in einem Umfang der Ankerhülse (1), durch die Mörtel aus der Ankerhülse (1) austreten kann, **gekennzeichnet durch**
• eine lösbare Umhüllung (8), die die Ankerhülse (1) hermetisch dicht umschließt, und
• einen entfernbaren Teiler (7), der die Ankerhülse (1) in zwei Kammern unterteilt, in denen zwei Komponenten eines Mörtels getrennt voneinander enthalten sind.

2. Ankerhülse nach Anspruch 1, **dadurch gekennzeichnet, dass** die Umhüllung (8) und der Teiler (7) verbunden sind.

3. Ankerhülse nach Anspruch 1, **dadurch gekennzeichnet, dass** die Umhüllung (8) und/oder der Teiler (7) Folien sind.

4. Ankerhülse nach Anspruch 3, **dadurch gekennzeichnet, dass** die Ankerhülse (1) mit der die Umhüllung (8) bildenden Folie (6) umwickelt ist.

5. Ankerhülse nach Anspruch 1, **dadurch gekennzeichnet, dass** der Teiler (7) durch einen Schlitz (5) der Ankerhülse (1) herausziehbar ist.

6. Ankerhülse nach Anspruch 1, **dadurch gekennzeichnet, dass** die Umhüllung (8) rohrförmig oder schlauchartig ist.

7. Ankerhülse nach Anspruch 6, **dadurch gekennzeichnet, dass** die Umhüllung (8) den Teiler (7) als flächiges, in einer Längsebene der Ankerhülse (1) angeordnetes Element enthält, das in einem Längsschlitz (5) der Ankerhülse (1) aufgenommen ist.

8. Ankerhülse nach Anspruch 6, **dadurch gekennzeichnet, dass** die rohrförmige oder schlauchartige Umhüllung (8) ein geschlossenes Stirnende aufweist, das ein Stirnende der Ankerhülse (1) verschließt.

9. Ankerhülse nach Anspruch 1, **dadurch gekennzeichnet, dass** die Ankerhülse (1) siebartig ausgebildet ist.

10. Ankerhülse nach Anspruch 1, **dadurch gekennzeichnet, dass** die mindestens eine Austrittsöffnung (2) geschlossen ist und durch Druck des Mörtels geöffnet wird.
